(19) Europäisches Patentamt
European Patent Office
Office européen des brevets

(11) EP 3 725 485 B1

(12) # EUROPEAN PATENT SPECIFICATION

(45) Date of publication and mention of the grant of the patent:
**14.08.2024 Bulletin 2024/33**

(21) Application number: **20168163.2**

(22) Date of filing: **06.04.2020**

(51) International Patent Classification (IPC):
***B29B 17/02*** *(2006.01)* ***B32B 43/00*** *(2006.01)*
***C09J 5/00*** *(2006.01)* *B29L 9/00 (2006.01)*
*B32B 37/12 (2006.01)* *B32B 37/14 (2006.01)*

(52) Cooperative Patent Classification (CPC):
**B29B 17/02; B32B 43/006; C09J 5/00;**
B29B 2017/0203; B29B 2017/0296; B29L 2009/00; B32B 2037/1276; B32B 2037/148; C09J 2301/502; C09J 2423/006; C09J 2423/046; C09J 2467/006; Y02W 30/62

(54) **METHOD OF RECYCLING FILM-TO-FILM LAMINATES**

VERFAHREN ZUR WIEDERVERWERTUNG VON FILM-ZU-FILM-LAMINATEN

PROCÉDÉ DE RECYCLAGE DE STRATIFIÉS FILM-SUR-FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2019 EP 19169871**

(43) Date of publication of application:
**21.10.2020 Bulletin 2020/43**

(73) Proprietor: **BASF SE**
**67056 Ludwigshafen am Rhein (DE)**

(72) Inventors:
- **Schuhmacher, Karl-Heinz**
  **67056 Ludwigshafen am Rhein (DE)**
- **Preishuber-Pflügl, Peter**
  **67056 Ludwigshafen am Rhein (DE)**
- **Spies, Annika**
  **67056 Ludwigshafen am Rhein (DE)**

(74) Representative: **BASF IP Association**
**BASF SE**
**GBI-C006**
**67056 Ludwigshafen (DE)**

(56) References cited:
**EP-A1- 0 644 229**
**WO-A1-2011/009800**
**WO-A1-2017/070370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 725 485 B1

## Description

The invention describes a method of recycling film-to-film laminates. The films of the film-to film laminates are bonded to one another using a laminating adhesive and are detached by treating the film-to-film laminates with an aqueous high pH liquid at elevated temperatures. The laminating adhesives have specific surface energies depending on the water vapor transmission rates of the films of the film-to-film laminates. The method may be used with particular advantage for recycling packaging of foods.

The invention relates to laminating adhesive for recyclable multi-layer packaging materials.

There is a desire to increase the amount of recycling of plastic materials, in particular recycling of plastic packaging materials. A problem is that typical current multi-layer flexible packaging materials cannot be separated into their individual film components, because the adhesives being used do not allow such a process. There is a need for laminating adhesives which enable a film separation of a laminate structure under suitable detaching conditions. Ideally, the laminating adhesives are water-based adhesives for film-to-film lamination to replace current solvent-borne and solventless adhesives. WO 2017/070370 A1 describes the recycling of label waste from pressure-sensitive adhesive labels comprising a facestock, an easily removable release liner and a pressure-sensitive adhesive (PSA). EP 0 644 229 A1 discloses a process for recycling rejected polycarbonate articles, such as automotive headlamps having a thermoplastic acrylic primer and a defective silicone hardcoat. WO 2011/009800 describes a film-to-film laminate, comprising first and second sheets of film adhered by an adhesive agent comprising an adhesive polymer, which is produced from a monomer mixture, comprising specific amounts of C1 - to C12-alkyl (meth)-acrylates and vinylaromatic monomers; vinyl acetate; hydroxyalkyl (meth)acrylates; (meth)-acrylic acid; and further functional monomers.

The object of the present invention was to provide a method for recycling of film-to-film laminates. The laminates should be water-based and have sufficient bond strength during their intended use but the bonded films should be easily detachable and separated under suitable recycling conditions using aqueous detaching liquids. It has been found that the object can be achieved by the method as described below. The present invention is defined by the subject-matter of independent claim 1.

The the invention is a method of recycling film-to-film laminates, the film-to film laminates having a first polymeric film and at least one second polymeric or metal film, the first and second films are bonded to one another using a laminating adhesive, the method comprising detaching the polymeric films by treating the film-to-film laminate with an aqueous detaching liquid with a pH of greater 8 at a temperature of 40 °C or more, wherein the surface energy of a film of the laminating adhesive is more than 30 mN/m if the water vapor transmission rate (WVTR) of each of the first and second polymeric films is less than or equal 10 $g/m^2$ d, and the surface energy of a film of the laminating adhesive is more than or equal 19 mN/m if the water vapor transmission rate WVTR of at least one of the first and second polymeric films is more than 10 $g/m^2$ d. The polymer films of the film-to-film laminates are preferably completely detached within a few hours (preferably less than 6 h) of treatment with the aqueous detaching liquid. WVTR is measured for 25 $\mu$m films at 38°C and 90% relative humidity. The first and the second films are bonded to one another with the laminating adhesive so firmly that the peel strength, measured 24 h after laminate production and at 23°C and 50% relative humidity, at an angle of 90° and a removal velocity of 100 mm/min, is 1 N/15 mm or more. The adhesive polymer of the laminating adhesive has a glass transition temperature of -30 to +15°C.

A subject of the disclosure is also the use of a laminating adhesive for making a film-to-film-laminate which is recyclable by a method of recycling film-to-film laminates as described herein. Preferred is the recycling of film-to-film laminates or multi-layer packaging materials which are part of a food packaging; and preferably flexible packaging.

The surface energy is measured on dried films of the adhesive based on the measurement of the contact angle with reference liquids (details see example section below).

The text below occasionally uses the designation "(meth)acryl..." and similar designations as an abbreviated notation for "acryl... or methacryl...". In the designation Cx alkyl (meth)acrylate and analogous designations, x denotes the number of the carbon atoms of the alkyl group.

The glass transition temperature is be determined by Differential Scanning Calorimetry according to ASTMD 3418-08, midpoint temperature. The glass transition temperature of the polymer in the polymer dispersion is the glass transition temperature obtained when evaluating the second heating curve (heating rate 20°C/min).

One-component adhesives are adhesives to which no external crosslinker (such as isocyanate crosslinker, for example) is added immediately prior to their use. In the case of composite film production there is preferably also no UV crosslinking, and the laminating adhesive preferably comprises no UV-crosslinkable components.

The laminating adhesive is preferably not self-adhesive. Non-self-adhesive adhesives are adhesives which in contrast to pressure sensitive adhesives exhibit only very little tack, or none, at room temperature and are employed preferably with application of pressure and/or elevated temperature. The tack, measured as loop tack, is preferably less than 1.7 N/25 mm (adhesive in an applied thickness of 20 $\mu$m, applied to a polyester film 12 $\mu$m thick, measured on steel at room temperature (20°C) with a removal velocity of 300 mm/min).

Preferred is a method wherein the laminating adhesive is applied in the form of an aqueous polymer dispersion,

and the aqueous polymer dispersion comprising polymer particles in dispersion in water that are preparable by radical emulsion polymerization of monomers comprising

a) at least 60 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers, and
b) at least 1 wt%, based on the total amount of monomers, of at least one monomer having at least one acid group, and
c) optionally comprising further monomers, different from monomers a) and b).

Monomers a)

The monomer mixture consists preferably of at least 60 wt%, preferably at least 80 wt%, as for example from 60 to 99.8 wt% or from 80 to 98 wt%, more preferably 90 to 98 wt%, based on the total amount of monomers, of at least one monomer a) selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers.

Suitable monomers a) are, for example, alkyl (meth)acrylates with a $C_1$-$C_{10}$ alkyl radical, such as methyl methacrylate, methyl acrylate, n-butyl acrylate, ethyl acrylate and 2-ethyl-hexyl acrylate, and also behenyl (meth)acrylate, isobutyl acrylate, tert-butyl (meth)acrylate, and cyclohexyl (meth)acrylate. In particular, mixtures of the alkyl (meth)acrylates are also suitable. Vinyl esters of carboxylic acids having 1 to 20 carbon atoms are, for example, vinyl laurate, vinyl stearate, vinyl propionate, Versatic acid vinyl esters, and vinyl acetate. Useful vinylaromatic compounds include vinyltoluene, alpha- and para-methylstyrene, alpha-butylstyrene, 4-n-butylstyrene, 4-n-decylstyrene and, preferably, styrene. The vinyl halides are ethylenically unsaturated compounds substituted by chlorine, fluorine or bromine, preferably vinyl chloride and vinylidene chloride. Examples of vinyl ethers which may be mentioned are vinyl methyl ether or vinyl isobutyl ether. Preference is given to vinyl ethers of alcohols comprising 1 to 4 carbon atoms. Hydrocarbons having 4 to 8 carbon atoms and two olefinic double bonds include butadiene, isoprene and chloroprene. Preferred as monomers a) are the $C_1$ to $C_{10}$ alkyl acrylates and methacrylates, more particularly $C_1$ to $C_8$ alkyl acrylates and methacrylates, and also styrene, and mixtures thereof. Especially preferred are methyl acrylate, methyl methacrylate, ethyl acrylate, n-butyl acrylate, n-butyl methacrylate, n-hexyl acrylate, octyl acrylate, 2-ethylhexyl acrylate, 2-propylheptyl acrylate, styrene, and also mixtures of these monomers.

Monomers b)

The monomer mixture consists to an extent of at least 1 wt%, more particularly from 1.5 to 15 wt% or from 2 to 10 wt%, based on the total amount of monomers, of at least one ethylenically unsaturated monomer having at least one acid group (acid monomer). The acid monomers b) comprise monomers which comprise at least one acid group, and also their anhydrides and salts thereof. The monomers b) include alpha,beta-monoethylenically unsaturated monocarboxylic and dicarboxylic acids, monoesters of alpha,beta-monoethylenically unsaturated dicarboxylic acids, the anhydrides of the aforesaid alpha,beta-monoethylenically unsaturated carboxylic acids, and also ethylenically unsaturated sulfonic acids, phosphonic acids or dihydrogenphosphates and their water-soluble salts, as for example their alkali metal salts. Examples thereof are acrylic acid, methacrylic acid, itaconic acid, maleic acid, fumaric acid, crotonic acid, vinylacetic acid, and vinyllactic acid. Examples of suitable ethylenically unsaturated sulfonic acids include vinylsulfonic acid, styrenesulfonic acid, acrylamidomethyl-propane sulfonic acid, sulfopropyl acrylate and sulfopropyl methacrylate. Preferred monomers b) are alpha,beta-monoethy-lenically unsaturated C3-C8 carboxylic acids and C4-C8 dicarboxylic acids, e.g., itaconic acid, crotonic acid, vinylacetic acid, acrylamidoglycolic acid, acrylic acid and methacrylic acid, and also their anhydrides. Particularly preferred monomers b) are itaconic acid, acrylic acid and methacrylic acid, and mixtures thereof.

Monomers c)

The monomer mixture may optionally comprise at least one further monomer c), which is different from the monomers a) to b). The monomers c) may be used, for example, from 0 to 10 wt% or from 0 to 8 wt%, more particularly from 0.1 to 10 wt% or from 0.1 to 8 wt% or from 0.2 to 5 wt%, based on the total amount of monomers.

Monomers c) are, for example, neutral and/or nonionic monomers with increased solubility in water, examples being the amides or the N-alkylolamides of the aforesaid carboxylic acids, as for example acrylamide, methacrylamide, diacetone acrylamide, N-methylolacryl-amide and N-methylolmethacrylamide, or phenyloxyethyl glycol mono(meth)acrylate. Further monomers d) are also, for example, monomers comprising hydroxyl groups, more particularly the hydroxyalkyl esters of the aforesaid alpha,beta-monoethylenically unsaturated carboxylic acids, preferably $C_1$-$C_{10}$ hydroxyalkyl (meth)acrylates such as, for example, hydroxyethyl acrylate, hydroxyethyl methacrylate, hydroxypropyl acrylate or hydroxypropyl methacrylate, and also 4-hydroxybutyl acrylate. Further monomers d) are also, for example, monomers comprising amino groups, more particularly the aminoalkyl esters of the aforesaid alpha,beta-monoethylenically unsaturated carboxylic acids, preferably $C_1$-$C_{10}$ aminoalkyl(meth)acrylates such as, for example, 2-aminoethyl(meth)acry-late or tert-butylaminoethyl methacrylate. Additionally contemplated as monomers d) are the nitriles of alpha,beta-monoethylenically unsaturated C3-C8 carboxylic acids, such as acrylonitrile or methacrylonitrile, for example. Other suitable monomers d) are bifunctional monomers which as well as an ethylenically unsaturated double bond have at least one glycidyl group, oxazoline group, ureido group or ureido-analogous group. Examples of glycidyl group monomers are ethylenically unsaturated glycidyl ethers and glycidyl esters, e.g., vinyl, allyl and methallyl glycidyl ethers, and glycidyl (meth)acrylate. Examples of monomers d) are also crosslinking monomers which have more than one radically polymerizable group, more particularly two or more (meth)acrylate groups, such as butanediol di(meth)acrylate or allyl methacrylate, for example. Particularly preferred monomers c) are hydroxyalkyl (meth)acrylates having 1 to 10 carbon atoms in the alkyl group. Suitable monomers c) are also ethylenically unsaturated compounds having at least one functional group selected from keto groups and aldehyde groups, preferably diacetone acrylamide.

Preferably the polymer particles of the polymer dispersion are produced from monomers comprising

a) from 90 to 98 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, and
b) from 2 to 10 wt%, based on the total amount of monomers, of at least one monomer having at least one acid group selected from the group consisting of alpha,beta-monoethylenically unsaturated C3-C8 carboxylic acids and C4-C8 dicarboxylic acids and their respective anhydrides, and
c) 0 to 8 wt%, based on the total amount of monomers, of other monomers, different from the monomers a) to b) and selected from the group consisting of acrylamide, diacetone acrylamide, methacrylamide, N-methylolacrylamide, N-methylolmethacryl-amide, phenyloxyethyl glycol mono(meth)acrylate, monomers comprising hydroxyl groups, monomers comprising amino groups, nitriles of alpha,beta-monoethylenically unsaturated C3-C8 carboxylic acids, bifunctional monomers which as well as an ethylenically unsaturated double bond have at least one glycidyl group, oxazoline group, ureido group or ureido-analogous group, and crosslinking monomers which have more than one radically polymerizable group.

If the polymer comprises at least one monomer selected from ethylenically unsaturated compounds having at least one functional group selected from keto groups and aldehyde groups (preferably diacetone acrylamide), then the laminating adhesive preferably comprises at least one compound A which has at least two functional groups that are able to enter into a crosslinking reaction with the keto groups or with the aldehyde groups. Compound A has at least 2 functional groups, more particularly 2 to 5 functional groups, which enter into a crosslinking reaction with the keto or aldehyde groups. Examples of compounds which are able to enter into a crosslinking reaction with the keto or aldehyde groups are compounds having hydrazide, hydroxylamine, oxime ether or amino groups. Suitable compounds having hydrazide groups are, for example, polycarboxylic hydrazides having a molar weight of preferably up to 500 g/mol. Preferred hydrazide compounds are dicarboxylic dihydrazides having preferably 2 to 10 carbon atoms. Examples include oxalic dihydrazide, malonic dihydrazide, succinic dihydrazide, glutaric dihydrazide, adipic dihy-drazide, sebacic dihydrazide, maleic dihydrazide, fumaric dihydrazide, itaconic dihydrazide and/or isophthalic dihydrazide. Particularly preferred are adipic dihydrazide, sebacic dihydrazide and isophthalic dihydrazide. Examples of suitable compounds having amino groups are ethylenediamine, propylenediamine, tetramethylenediamine, pentamethylene-diamine, hexamethylenediamine, diethylenetriamine, triethylenetetramine, polyethyleneimines, partly hydrolyzed polyvinylformamides, ethylene oxide and propylene oxide adducts such as the "Jeffamines", cyclohexanediamine and xylylenediamine. The compound having the functional groups may be added at any point in time to the composition, or to the dispersion of the adhesive polymer. In the laminating adhesive there is as yet no crosslinking with the keto or aldehyde groups. Crosslinking occurs on the coated substrate only in the course of drying. With preference compound A is adipic dihydrazide when monomer c) comprises diacetone acrylamide.

The molar ratio of the functional groups that are reactive with keto and/or aldehyde groups to the keto and/or aldehyde groups of the polymer is preferably 1:10 to 2:1, more particularly 1:5 to 2:1, more preferably 1:2 to 2:1, and very preferably 1:1.3 to 1.3:1. Especially preferred are equimolar amounts of the functional groups and of the keto and/or aldehyde groups.

Preferably the polymer particles of the polymer dispersion are produced from monomers comprising

a1) from 80 to 90% by weight ethyl acrylate

a2) from 5 to 15% by weight methyl methacrylate and
b) from 2 to 10% by weight of acrylic acid, methacrylic acid or their mixture;
or
a1) from 50 to 65% by weight n-butyl acrylate
a2) from 30-45 % by weight styrene
b) from 2 to 10% by weight of acrylic acid, methacrylic acid or their mixture.

The monomers a) are preferably selected from C1 to C8 alkyl acrylates, C1 to C8 alkyl methacrylates, and styrene. The monomers b) are preferably selected from acrylic acid, methacrylic acid, and itaconic acid. The monomers c) are preferably selected from hydroxyalkyl (meth)-acrylates having 1 to 10 carbon atoms in the alkyl group.

The monomers of the polymerization are selected such that the glass transition temperature is in the range from -30°C to +15°C, more particularly from -20°C to +10°C. By purposive variation of monomer type and quantity, those skilled in the art are able to prepare aqueous polymeric compositions whose polymers have a glass transition temperature in the desired range. Orientation is possible by means of the Fox equation. According to Fox (T.G. Fox, Bull. Am. Phys. Soc. 1956 [Ser. II] 1, page 123, and according to Ullmann's Encyclopädie der technischen Chemie, Vol. 19, page 18, 4th edition, Verlag Chemie, Weinheim, 1980), the glass transition temperature of copolymers is calculated to a good approximation by:

$$1/T_g = x^1/T_g^1 + x^2/T_g^2 + .... x^n/T_g^n,$$

where $x^1$, $x^2$, .... $x^n$ are the mass fractions of the monomers 1, 2, .... n and $T_g^1$, $T_g^2$, .... $T_g^n$ are the glass transition temperatures in degrees kelvin of the polymers synthesized from only one of the monomers 1, 2, .... n at a time. The $T_g$ values for the homopolymers of the majority of monomers are known and are listed for example in Ullmann's Encyclopedia of Industrial Chemistry, Vol. 5, Vol. A21, page 169, VCH Weinheim, 1992; further sources for glass transition temperatures of homopolymers are, for example, J. Brandrup, E.H. Immergut, Polymer Handbook, 1st Ed., J. Wiley, New York 1966, 2nd Ed. J. Wiley, New York 1975, and 3rd Ed. J. Wiley, New York 1989.

The polymer dispersions are obtainable by radical emulsion polymerization of ethylenically unsaturated, radically polymerizable compounds (monomers).

This polymerization takes place preferably with emulsifiers or protective colloids to stabilize the polymer dispersion. Emulsifiers are nonpolymeric, amphiphilic, surface-active substances that are added to the polymerization mixture before or after the polymerization. A comprehensive description of suitable protective colloids is found in Houben-Weyl, Methoden der organischen Chemie, volume XIV/1, Makromolekulare Stoffe, Georg-Thieme-Verlag, Stuttgart, 1961, pp. 411 to 420. Emulsifiers include anionic, cationic and nonionic emulsifiers. Preferred for use as surface-active substances are emulsifiers, whose molecular weight, in contrast to the protective colloids, are typically below 2000 g/mol. Where mixtures of surface-active substances are used, the individual components must of course be compatible with one another, something which in case of doubt can be checked by means of a few preliminary tests. Preference is given to using anionic and nonionic emulsifiers as surface-active substances. Common accompanying emulsifiers are, for example, ethoxylated fatty alcohols (EO level: 3 to 50, alkyl radical: $C_8$ to $C_{36}$), ethoxylated mono-, di- and trialkylphenols (EO level: 3 to 50, alkyl radical: $C_4$ to $C_9$), alkali metal salts of dialkyl esters of sulfosuccinic acid and also alkali metal and ammonium salts of alkyl sulfates (alkyl radical: $C_8$ to $C_{12}$), of ethoxylated alkanols (EO level: 4 to 30, alkyl radical: $C_{12}$ to $C_{18}$), of ethoxylated alkylphenols (EO level: 3 to 50, alkyl radical: $C_4$ to $C_9$), of alkylsulfonic acids (alkyl radical: $C_{12}$ to $C_{18}$) and of alkylarylsulfonic acids (alkyl radical: $C_9$ to $C_{18}$).

Further suitable emulsifiers are compounds of the general formula

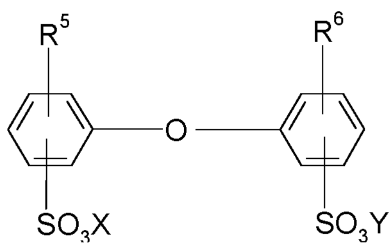

in which R5 and R6 are hydrogen or C4 to C14 alkyl and are not simultaneously hydrogen, and X and Y may be alkali metal ions and/or ammonium ions. With preference R5 and R6 are linear or branched alkyl radicals having 6 to 18 carbon atoms, or are hydrogen, and in particular they have 6, 12 and 16 carbon atoms, with R5 and R6 not both simultaneously being hydrogen. X and Y are preferably sodium, potassium, or ammonium ions, with sodium being particularly preferred.

Particularly advantageous compounds are those in which X and Y are sodium, R5 is a branched alkyl radical having 12 carbon atoms, and R6 is hydrogen or R5. Use is frequently made of technical mixtures containing a fraction of 50 to 90 wt% of the monoalkylated product. Commercial products of suitable emulsifiers are for example Dowfax®2 A1, Emulan® NP 50, Dextrol®OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. For the present disclosure, ionic emulsifiers or protective colloids are preferred. Particular preference is given to ionic emulsifiers, especially salts and acids, such as carboxylic acids, sulfonic acids and sulfates, sulfonates or carboxylates. In particular it is also possible to use mixtures of ionic and nonionic emulsifiers.

The polymerization may also take place in the presence of a protective colloid. Protective colloids are polymeric compounds which on solvation bind large quantities of water and are capable of stabilizing dispersions of water-insoluble polymers. In contrast to emulsifiers, they generally do not lower the interfacial tension between polymer particles and water. The number-average molecular weight of protective colloids is for example above 1000 g/mol.

In one embodiment the polymerization takes place with use of at least one chain transfer agent. By this means it is possible to reduce the molar mass of the emulsion polymer through a chain termination reaction. The chain transfer agents are bonded to the polymer in this procedure, generally to the chain end. The amount of the chain transfer agents is especially 0.05 to 4 parts by weight, more preferably 0.05 to 0.8 part by weight, and very preferably 0.1 to 0.6 part by weight, per 100 parts by weight of the monomers to be polymeri-zed. Suitable chain transfer agents are, for example, compounds having a thiol group such as tert-butyl mercaptan, thioglycolic acid ethylacrylic ester, mercaptoethanol, mercaptopropyl trimethoxysilane or tert-dodecyl mercaptan. The chain transfer agents are generally compounds of low molecular mass, having a molar weight of less than 2000, more particularly less than 1000 g/mol. Preferred are 2-ethylhexyl thioglycolate (EHTG), isooctyl 3-mercaptopropionate (IOMPA) and tert-dodecyl mercaptan (tDMK).

The polymerization takes place preferably with seed control, i.e., in the presence of polymer seed (seed latex). Seed latex is an aqueous dispersion of finely divided polymer particles having an average particle diameter of preferably 20 to 40 nm. Seed latex is used in an amount of preferably 0.01 to 0.5 part by weight, more preferably of 0.03 to 0.3 part by weight, per 100 parts by weight of monomers. Suitable are for example latices based on polystyrene or based on polymethyl methacrylate. A preferred seed latex is polystyrene seed.

The polymer dispersion is prepared by emulsion polymerization. Emulsion polymerization comprises polymerizing ethylenically unsaturated compounds (monomers) in water using typically ionic and/or nonionic emulsifiers and/or protective colloids or stabilizers as surface-active compounds to stabilize the monomer droplets and the polymer particles subsequently formed from the monomers. If no or only little amounts of emulsifiers and/protective colloids are desired for stabilizing the polymer dispersion, the resulting polymer dispersion can be stabilized by a specific regime. This regime is based on a slow initial monomer feed in the presence of a very small amount of polymer seed (seed control), followed by the neutralization of the acid monomers used in the course of or after the polymerization. Acid groups in the polymer are neutralized preferably by the feeding of a neutralizing agent during or after the polymerization, with the acid groups being neutralized wholly or partly by the feeding of a base. The neutralizing agent may be added, for example, in a separate feed parallel to the feeding of the monomer mixture. After feeding of all of the monomers, the polymerization vessel preferably comprises the amount of neutralizing agent required for neutralizing at least 10% and preferably 10% to 100% or 25% to 90% acid equivalents. The particularly preferred neutralizing agent is ammonia.

The emulsion polymerization may be initiated using water-soluble initiators. Examples of water-soluble initiators are ammonium salts and alkali metal salts of peroxodisulfuric acid, e.g., sodium peroxodisulfate, hydrogen peroxide, or organic peroxides, e.g., tert-butyl hydroperoxide. Also suitable as initiator are reduction-oxidation (redox) initiator systems. Redox initiator systems consist of at least one generally inorganic reducing agent and an inorganic or organic oxidizing agent. The oxidant component is, for example, the emulsion polymerization initiators already mentioned hereinabove. The reductant components are, for example, alkali metal salts of sulfurous acid, for example sodium sulfite, sodium hydrogensulfite, alkali metal salts of disulfurous acid such as sodium disulfite, bisulfite addition compounds of aliphatic aldehydes and ketones, such as acetone bisulfite, or reducing agents such as hydroxymethanesulfinic acid and the salts thereof, or ascorbic acid. The redox initiator systems may be employed with co-use of soluble metal compounds whose metallic component can occur in a plurality of valence states. Typical redox initiator systems are, for example, ascorbic acid/iron(II) sulfate/sodium peroxydisulfate, tert-butyl hydroperoxide/sodium disulfite, tert-butyl hydroperoxide/sodium hydroxymethanesulfinate. The individual components, for example the reductant component, may also be mixtures, for example a mixture of the sodium salt of hydroxymethanesulfinic acid and sodium disulfite.

The initiators cited are generally employed in the form of aqueous solutions, the lower concentration limit being determined by the amount of water acceptable in the dispersion and the upper limit being determined by the solubility in water of the particular compound. The concentration of the initiators is generally from 0.1 to 30 wt%, preferably from 0.5 to 20 wt% and more preferably from 1.0 to 10 wt% based on the monomers to be polymerized. It is also possible to use two or more different initiators in the emulsion polymerization.

The emulsion polymerization takes place preferably at 30 to 130°C, preferably at 50 to 90°C.

The polymerization medium may consist either solely of water or of mixtures of water and liquids miscible

therein such as methanol. Preference is given to using solely water. The emulsion polymerization may be carried out in the form of a feed process, including staged or gradient regimes. In the polymerization, a polymer seed can be introduced initially for more effective establishment of the particle size.

The manner in which the initiator is added to the polymerization vessel over the course of the radical aqueous emulsion polymerization is known to those of ordinary skill in the art. It may be either initially charged to the polymerization vessel in its entirety or employed continuously or in a staged manner at the rate of its consumption over the course of the radical aqueous emulsion polymerization. This specifically depends on the chemical nature of the initiator system and on the polymerization temperature. Preference is given to initially charging a portion and supplying the remainder to the polymerization zone at the rate of its consumption. In order to remove the residual monomers, it is common after the end of the emulsion polymerization proper, i.e., after a monomer conversion of at least 95%, to add initiator as well. In the feed process, the individual components may be added to the reactor from above, from the side or from below through the reactor floor.

The emulsion polymerization generally affords aqueous dispersions of the polymer having solids contents of from 15 to 75 wt%, preferably from 40 to 60 wt% and more preferably not less than 50 wt%.

The pH of the polymer dispersion is preferably adjusted to a pH greater than 5, more particularly to a pH of between 5.5 and 8.

Preferably, the laminating adhesive is not water-soluble at a pH from 6 to 8 (at 23°C°).

The polymer dispersions can be used in aqueous laminating adhesive preparations for the bonding of substrates of large surface area, more particularly for the production of composite films. In this method, the aqueous polymer dispersions may be used as they are or after formulation with customary auxiliaries. Examples of customary auxiliaries are wetting agents, thickeners, light stabilizers, biocides, defoamers, and so on. The auxiliaries are preferably water-soluble.

Preferably, the aqueous laminating adhesive comprise at least on particulate filler for improving separation of the adhesive film from the substrate when delaminating the film-to-film laminates, in particular when the filler-containing adhesive film has a different specific gravity than the substrate films. The amount of fillers is preferably from 1 to 50 wt.% or from 5 to 40 wt.%. The filler is insoluble in the adhesive composition and may be selected from inorganic fillers and organic fillers. Suitable inorganic fillers are, for example, calcium carbonate, kaolin, mica, silica, chalk, microdolomite, finely ground quartz, mica, talc, clay, barium sulfate, argillaceous earth, iron oxide, titanium dioxide, glass powder, glass flakes, magnesium carbonate, aluminum hydroxide, bentonite, fly ash, kieselguhr, perlite, carbon black, graphite, clay minerals, microdolomite, finely ground quartz, and mica. Preference is given to using fillers in flake form such as mica, for example, alone or in combination with customary inorganic pigments such as calcium carbonate, barium sulfate, kaolin, silica, chalk, or talc. Suitable organic fillers are, for example, powder coating materials, examples being epoxy powder coating materials, polymer powders of, for example, ground solid ethylene/vinyl acetate copolymer (EVA) resins, dried acrylate dispersions, and polysaccharides.

A preferred laminating adhesive for use in the invention comprises

(A) an aqueous polymer dispersion, and

(B) from 1 to 50 wt.%. preferably form 5 to 40 wt.% filler materials selected from calcium carbonate, kaolin, mica, silica, chalk, microdolomite, finely ground quartz, mica, talc, clay, barium sulfate, argillaceous earth, iron oxide, titanium dioxide, glass powder, glass flakes, magnesium carbonate, aluminum hydroxide, bentonite, fly ash, kieselguhr, perlite, carbon black, graphite, clay minerals, microdolomite, finely ground quartz, and mica;

wherein the aqueous polymer dispersion comprising polymer particles in dispersion in water that are preparable by radical emulsion polymerization of monomers comprising

a) at least 60 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers, and

b) at least 1 wt%, based on the total amount of monomers, of at least one monomer having at least one acid group, and

c) optionally comprising further monomers, different from monomers a) and b).

A preferred laminating adhesive for use in the invention comprises

(A) an aqueous polymer dispersion of an adhesive polymer, and

(B) from 1 to 50 wt.%. preferably form 5 to 40 wt.% filler materials selected from calcium carbonate, kaolin, mica, silica, chalk, microdolomite, finely ground quartz, mica, talc, clay, barium sulfate, argillaceous earth, iron oxide,

titanium dioxide, glass powder, glass flakes, magnesium carbonate, aluminum hydroxide, bentonite, fly ash, kieselguhr, perlite, carbon black, graphite, clay minerals, microdolomite, finely ground quartz, and mica;
wherein the aqueous polymer dispersion comprising polymer particles in dispersion in water that are preparable by radical emulsion polymerization of monomers comprising

a) from 90 to 98 wt% based on the total amount of monomers, of at least one monomer selected from the group consisting of C1 to C8 alkyl acrylates, C1 to C8 alkyl methacrylates, and styrene, and
b) from 2 to 10 wt%, based on the total amount of monomers, of at least one monomer having at least one acid group selected from the group consisting of acrylic acid, methacrylic acid, and itaconic acid,, and
c) 0 to 8 wt%, based on the total amount of monomers, of other monomers, different from the monomers a) to b) and selected from the group consisting of acrylamide, diacetone acrylamide, methacrylamide, N-methylolacrylamide, N-methylolmethacrylamide, phenyloxyethyl glycol mono(meth)acrylate, monomers comprising hydroxyl groups, monomers comprising amino groups, nitriles of alpha,beta-monoethylenically unsaturated C3-C8 carboxylic acids, bifunctional monomers which as well as an ethylenically unsaturated double bond have at least one glycidyl group, oxazoline group, ureido group or ureido-analogous group, and crosslinking monomers which have more than one radically polymerizable group, preferably hydroxyalkyl (meth)acrylates having 1 to 10 carbon atoms in the alkyl group;

wherein the adhesive polymer of the laminating adhesive has a glass transition temperature of -30 to +15°C, preferably of -20 to +10°C, measured by Differential Scanning Calorimetry according to ASTM D 3418-08 as the midpoint temperature of the second heating curve at a heating rate or 20°C/min.

In the method for producing composite films, at least two films are bonded to one another using the aqueous polymer dispersion. In this method, the polymer dispersion of the disclosure, or a preparation formulated accordingly, is applied to the large-surface-area substrates to be bonded, preferably with a layer thickness of 0.1 to 20 g/m$^2$, more preferably 1 to 7 g/m$^2$, by means, for example, of knife coating, spreading, etc. Customary coating techniques may be employed, examples being roller coating, reverse roller coating, gravure roller coating, reverse gravure roller coating, brush coating, rod coating, spray coating, airbrush coating, meniscus coating, curtain coating or dip coating. After a short time for the water of the dispersion to evaporate (preferably after 1 to 60 seconds), the coated substrate may then be laminated with a second substrate, the temperature being able, for example, to be 20 to 200°C, preferably 20 to 100°C, and the pressure being able, for example, to be 100 to 3000 kN/m$^2$, preferably 300 to 2000 kN/m$^2$.

In the film-to-film lamination (also called composite film lamination), at least two films are bonded to one another with the laminating adhesive such that the peel strength (after 24 h, at 23°C/50% relative humidity) is 1 N/15 mm or more, or 2.5 N/15 mm or more or 3 N/15 mm or more or that the films bonded to one another can be parted only with destruction of at least one of the films, unless treated with the de-laminating conditions as disclosed herein.

The adhesive polymer dispersion may be employed as a one-component composition, i.e. without additional crosslinking agents, more particularly without isocyanate crosslinkers. Alternatively, the adhesive polymer may be crosslinked, e.g. by use of water-dispersible polyisocyanates. The adhesive may be formulated as two-component system. The second component comprises at least one crosslinking agent. Suitable crosslinking agents are water dispersible oligomeric or polymeric isocyanates, aziridines or water dispersible or water soluble silanes. Preferred mixing ratios are 100 parts by weight of aqueous adhesive polymer dispersion to 0,5 to less than 3 parts by weight of crosslinker. An example of a crosslinker is Basonat® LR 9056 (water-dispersible polyisocyanate based on isocyanurated hexamethylene diisocyanate).

At least one of the films may be metalized or printed on the side coated with the adhesive.

Examples of suitable substrates include polymer films, more particularly films of polyethylene (PE; high density HDPE or low density LDPE), oriented polypropylene (OPP), undrawn polypropylene (CPP), polyamide (PA), polyethylene terephthalate (PET), polyacetate, cellophane, polymer films coated (vapor coated) with metal, e.g., aluminum (metalized films for short), or metal foils, composed of aluminum, for example. The stated foils and films may be bonded to one another o identical or similar types or to a film or foil of another type - for example, polymer films to metal foils, different polymer films to one another, etc. The stated foils and films may also, for example, have been printed with printing inks.

The thickness of the first and second substrate films may amount for example to from 5 to 500 $\mu$m, preferably from 5 to 100 $\mu$m or from 5 to 40 $\mu$m.

Preferably, the material of the first film is selected from the group consisting of polyethylene, oriented polypropylene, undrawn polypropylene, polyamide, polyethylene terephthalate, polyacetate, cellophane. Preferably, the material of the second film is selected from the group consisting of polyethylene, oriented polypropylene, undrawn polypropylene, polyamide, polyethylene terephthalate, polyacetate, cellophane, metalized films and metal foils.

Preferably, the first polymeric film is a polyolefin (such as for example polyethylene, oriented polypropylene, undrawn polypropylene) and the second polymeric film is selected from polyolefins (such as for example polyethylene, oriented polypropylene, undrawn polypropylene) and polyesters (such as for example polyethylene terephthalate).

Particularly preferred is that the first and second polymeric film are polypropylene or that the first polymeric film is polyethylene and the second polymeric film is polyethylene terephthalate.

Surface treatment of the foil or film substrates ahead of coating with a polymer dispersion of the disclosure is not absolutely necessary. However, better results can be obtained if the surfaces of the film or foil substrates are modified prior to coating. In this case it is possible to employ customary surface treatments, such as corona treatment, in order to boost the adhesion. The corona treatment or other surface treatments are carried out to the extent required for sufficient wettability with the coating composition. Customarily, corona treatment of approximately 10 watts per square meter per minute is sufficient for this purpose. Alternatively or additionally it is also possible, optionally, to use primers or tie coats between foil or film substrate and adhesive coating. Furthermore, other, additional functional layers may be present on the composite films, examples being barrier layers, print layers, color layers or varnish layers, or protective layers. These functional layers may be located externally, i.e., on the side of the foil or film substrate facing away from the adhesive-coated side, or internally, between foil or film substrate and adhesive layer.

Preferably, the first and the second polymeric film do not delaminate within at least 6 hours when in contact with water of a pH of 7 or lower at a temperature of 23 °C.

It has been found that the film-to-film laminates can be easily delaminated with aqueous high pH liquids if the adhesive film has specific surface energy, depending on the water vapor transmission rates of the laminate films.

The surface energy of a dried film of the laminating adhesive is more than 30 mN/m (preferably 31 to 60 mN/m) if the water vapor transmission rate WVTR of each of the first and second polymeric films is less than or equal 10 $g/m^2$ d.

The surface energy of a film of the laminating adhesive is more than 19 mN/m if the water vapor transmission rate WVTR of at least one of the first and second polymeric films is more than 10 $g/m^2$ d. The water vapor transmission rate is measured at 38 °C and 90% relative humidity.

The WVTR for typical plastic materials is given in table 1 and can be measured as described in the example section below .

Table 1: Water vapor transmission rates WVTR at 38°C, 90% relative humidity

| Film (thickness 25 μm) | WVTR [$g/m^2$ per day)] |
|---|---|
| LDPE | 10-20 |
| HDPE | 7-10 |
| OPP | 5-7 |
| EVOH | 1000 |
| PA | 300-400 |
| PS | 70-150 |
| PET | 15-20 |
| EVOH: ethylene vinyl alcohol copolymer; PS: polystyrene<br>source: R. Coles, D. McDowell, M.J. Kirwan, Food Packaging Technology, Blackwell 2003, p. 223 | |

The film-to-film laminates are delaminated by treating them with an aqueous liquid with a pH of higher than 7, preferably at pH 8 or higher, more particularly from 9 to 12, e.g., about 8; and at an elevated temperature of higher than 25 °C, preferably from 40 to 90 °C or from 50 to 80 °C and preferably with agitation. A suitable detaching liquid is an aqueous alkali solution e.g. a 1 to 2 wt.-% strength aqueous solution of sodium hydroxide or potassium hydroxide. The aqueous detaching liquid may contain further additives, such as for example surfactants. Preferably, the film-to-film laminates are recyclable by delaminating the first polymeric film from the second polymeric films in an aqueous medium at a pH of 8 or more than 8 and at a temperature of equal or higher than 40°C.

Particular advantages of the film-to-film laminates obtainable in accordance with the disclosure are the following in particular:

- good peel strength at neutral pH and room temperature
- easy delamination at basic pH and elevated temperatures

Examples

Abbreviations

| | |
|---|---|
| IA | itaconic acid |
| AA | acrylic acid |
| MAA | methacrylic acid |
| S | styrene |
| MA | methyl acrylate |
| MMA | methyl meth acrylate |
| nBA | n-butyl acrylate |
| EA | ethyl acrylate |
| pphm | parts per hundred monomers (parts by weight per 100 parts by weight of monomers) |
| PET | polyethylene terephthalate |
| PE | polyethylene |

Preparation of lamination adhesives:

Aqueous lamination adhesives are prepared by emulsion polymerization of the following monomers (amounts in parts by weight):

Example 1: 85,5% EA / 12% MMA / 2,5% AA
Example 2: 86 EA / 10 MMA / 4 AA
Example 3: 86 EA / 8 MMA / 6 AA
Example 3a: 86 EA / 8 MMA / 6 AA;
second component: 1 wt% (based on polymer dispersion) Basonat® LR 9056 (polyisocyanate crosslinker)
Example 4: 86 BA / 9 MA / 2 S / 2 MAA /1 IA
Example 5: 86 BA / 7 MA / 2 S / 4 AA /1 IA
Example 6: 86 BA / 5 MA / 2 S / 6 AA /1 IA
Example 7: 86 EA / 8 MMA / 6 AA
Example 8: 86 EA / 6 MMA / 8 AA

The aqueous lamination adhesives each have a solid content of 45 wt.%.

Preparation of film-to-film laminates:

The polymer dispersions are knife-coated in a dry film thickness of 2-3 g/m$^2$ (based on the solids content) onto the primary film. After hot air drying, the films thus coated are rolled up with a second film and then dry laminated under a pressure of 6.5 bar and at 70°C in a roller press at 5 m/min. The composite films are subsequently stored for 1 day at room temperature under standard conditions (23°C; 50% relative humidity).

Test methods

Peel strength

Following storage of the laminate for 24 h at room temperature the laminate is cut into strips 15 millimeters wide. The laminate strip is pulled apart on a Zwick tensile testing machine and the force required to achieve this is recorded. The test takes place on a tensile testing machine at an angle of 90 degrees (T-test) and a removal velocity of 100 mm/min. The test strip is opened up on one side, with one of the resultant ends being clamped into the upper jaw and the other into the lower jaw of the tensile testing machine, and the test is commenced. The result reported is the average maximum of the force from 3 individual measurements, in N/15 mm.

Free surface energy:

instrument: Drop Shape Analyzer - DSA 100 (Krüss)

the following reference liquids are used: (surface energy in mN/m):

| | $\gamma_l$ | $\gamma_l^d$ | $\gamma_l^p$ |
|---|---|---|---|
| Deionized water | 72.8 | 21.8 | 51 |
| Formamide | 58.0 | 39.0 | 19.0 |
| Diiodomethane | 50.8 | 50.8 | 0 |

Adhesive films are prepared from polymer dispersions by coating a PET-film using a 350 μm coating knife. The contact angle angel with three reference liquids is measured at 23 °C.

The free surface energy is calculated from the contact angles according to the Owens-Wendt method (see Jorda-Vilaplana et al, J. Appl. Polym. Sci. 2015, 132, 42391; https://doi.org/10.1002/app.42391; Owens et al, J. Appl. Polym. Sci. 1969, 13,1741):

$$\gamma_l\,(1 + \cos\theta) = 2\,(\,\gamma_s^d\,\gamma_l^d\,)^{1/2} + 2\,(\,\gamma_s^p\,\gamma_l^p\,)^{1/2}$$

- $\theta$ contact angle angel between reference liquid and dried film
- $\gamma_l$ free surface energy of the reference liquid; $\gamma_l = \gamma_l^d + \gamma_l^p$
- $\gamma_l^d$ disperse part of the free surface energy of the reference liquid
- $\gamma_l^p$ polar part of the free surface energy of the reference liquid
- $\gamma_s^d$ disperse part of the free surface energy of the solid test surface
- $\gamma_s^p$ polar part of the free surface energy of the solid test surface
- $\gamma_s$ free surface energy of the solid test surface; $\gamma_s = \gamma_s^d + \gamma_s^p$

Plotting $\gamma_l$ (1 + cos$\theta$) 12 $(\gamma_l^d\,)^{1/2}$ against $(\gamma_l^d)^{1/2}$ / $(\gamma_l^d)^{1/2}$ results in a regression line with the slope $(\gamma_s^p)^{1/2}$ and intersection with the Y-axis at $(\gamma_s^d)^{1/2}$. The free surface energy is calculated according to: $\gamma_s = \gamma_s^d + \gamma_s^p$.

Water vapor transmission rates (WVTR)

WVTR can be measured by the Cobb method, described by TAPPI T 441, using a Mocon PERMATRAN-W model 333 instrument at 38 °C, a relative humidity of 90% RH, test area of 100 $cm^2$ and 30 min testing time. The lower detection limit of the device is 0.05 g $m^{-2}$ $day^{-1}$. The instrument measures the transmission rate of water vapor through a substrate by keeping the atmosphere on one side of the sample at a constant relative humidity while flooding the other side with a stream of dry nitrogen. The nitrogen flows past the substrate and then on to an IR detector which measures how much water has been picked up by the gas.

Delamination:

Agitation at 200 rpm in aqueous one molar sodium hydroxide solution at 50°C. The time for complete separation of the laminate films is measured.

Test system 1

BOPP 20 μm / 5 μm adhesive (dried) / BOPP 20 μm, 15 x 15 mm strips.
WVTR (BOPP) 5-7 $g/m^2$ per day
Test results are summarized in table 2.

Table 2: Delamination test results

| Adhesive ( aqueous polymer dispersion) | Free surface energy of dried adhesive [mN/m] | Time for complete film separation [h] | Peel strength [N / 15 mm] |
|---|---|---|---|
| Example 1 | 48 | 4.4 | 1.2 |
| Example 1 | 48 | >6 (in water at pH 7) | 1.2 |
| Example 2 | 34.5 | 4 | 1.1 |

(continued)

| Adhesive ( aqueous polymer dispersion) | Free surface energy of dried adhesive [mN/m] | Time for complete film separation [h] | Peel strength [N / 15 mm] |
|---|---|---|---|
| Example 3 | 40.7 | 2.5 | 1.0 |
| Example 3a | 41 | 4 | 1.4 |
| Example 4 | 23 | >6 | 1.6 |
| ">6" means no complete separation within 6 hours | | | |

Test system 2

PET 40 μm / 5 μm adhesive (dried) /PE 50 μm, 15 x 15 mm strips.

WVTR (PET) 15-20 g/m$^2$ per day

Test results are summarized in table 3.

Table 3: Delamination test results

| Adhesive ( aqueous polymer dispersion) | Free surface energy of dried adhesive [mN/m] | Time for complete film separation [h] | Peel strength [N / 15 mm] |
|---|---|---|---|
| Example 5 | 18.2 | >6.5 | 1.5 |
| Example 6 | 18.8 | 4.5 | 1.5 |
| Example 7 | 40.7 | 2.25 | 2.0 |
| Example 8 | 32.5 | 2.25 | 2.1 |
| Example 8 | 32.5 | >6 (in water at pH 7) | 2.1 |
| ">6" means no complete separation within 6 hours<br>">6.5" means no complete separation within 6.5 hours | | | |

## Claims

1. A method of recycling film-to-film laminates, the film-to film laminates having a first polymeric film and at least one second polymeric or metal film, the first and second films are bonded to one another using a laminating adhesive,

   the method comprising detaching the first from the second film by treating the film-to-film laminate with an aqueous liquid with a pH of greater 8 at a temperature of 40 °C or more, wherein the first and the second films are bonded to one another with the laminating adhesive so firmly that the peel strength, measured 24 h after laminate production and at 23°C and 50% relative humidity, at an angle of 90° and a removal velocity of 100 mm/min, is 1 N/15 mm or more, and
   wherein the adhesive polymer of the laminating adhesive has a glass transition temperature of -30 to +15°C measured by Differential Scanning Calorimetry according to ASTM D 3418-08 as the midpoint temperature of the second heating curve at a heating rate of 20°C/min,
   **characterized in that** the surface energy of a film of the laminating adhesive is more than 30 mN/m if the water vapor transmission rate of each of the first and second films is less than or equal 10 g/m$^2$ d, and the surface energy of a film of the laminating adhesive is more than 19 mN/m if the water vapor transmission rate of at least one of the first and second films is more than 10 g/m$^2$ d, water vapor transmission rate is measured for 25 μm films at 38 °C and 90% relative humidity; and surface energy is measured as free surface energy as described in the examples.

2. The method according claim 1, wherein the material of the first film is selected from the group consisting of polyethylene, oriented polypropylene, undrawn polypropylene, polyamide, polyethylene terephthalate, polyacetate, cellophane; and wherein the material of the second film is selected from the group consisting of polyethylene, oriented polypropylene, undrawn polypropylene, polyamide, polyethylene terephthalate, polyacetate, cellophane, metalized films and metal foils.

**3.** The method according claim 1 or 2, wherein the first polymeric film is a polyolefin and the second polymeric film is selected from polyolefins and polyesters.

**4.** The method according to claim 3, wherein the first and second polymeric films are polypropylene or wherein the first polymeric film is polyethylene and the second polymeric film is polyethylene terephthalate.

**5.** The method according to any of the preceding claims, wherein the composite film is recyclable by delaminating the first polymeric film from the second polymeric film in an aqueous medium at a pH of more than 8 and at a temperature of equal or higher than 50°C.

**6.** The method according to any of the preceding claims, wherein the first and the second polymeric films do not delaminate at pH 7 or lower at a temperature of 23 °C.

**7.** The method according to any of the preceding claims, wherein the laminating adhesive is not water-soluble at a pH from 6 to 8.

**8.** The method according to any of the preceding claims, wherein the laminating adhesive is applied in the form of an aqueous polymer dispersion, and the aqueous polymer dispersion comprising polymer particles in dispersion in water that are preparable by radical emulsion polymerization of monomers comprising

a) at least 60 wt%, based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers, and
b) at least 1 wt%, based on the total amount of monomers, of at least one monomer having at least one acid group, and
c) optionally comprising further monomers, different from monomers a) and b).

**9.** The method according to claim 8, wherein the polymer particles are produced from monomers comprising

a) from 90 to 98 wt% based on the total amount of monomers, of at least one monomer selected from the group consisting of C1 to C20 alkyl acrylates, C1 to C20 alkyl methacrylates, vinyl esters of carboxylic acids comprising up to 20 carbon atoms, vinylaromatics having up to 20 carbon atoms, and
b) from 2 to 10 wt%, based on the total amount of monomers, of at least one monomer having at least one acid group selected from the group consisting of alpha,beta-monoethylenically unsaturated C3-C8 carboxylic acids and C4-C8 dicarboxylic acids and their respective anhydrides, and
c) 0 to 8 wt%, based on the total amount of monomers, of other monomers, different from the monomers a) to b) and selected from the group consisting of acrylamide, diacetone acrylamide, methacrylamide, N-methylolacrylamide, N-methylolmethacrylamide, phenyloxyethyl glycol mono(meth)acrylate, monomers comprising hydroxyl groups, monomers comprising amino groups, nitriles of alpha,beta-monoethylenically unsaturated C3-C8 carboxylic acids, bifunctional monomers which as well as an ethylenically unsaturated double bond have at least one glycidyl group, oxazoline group, ureido group or ureido-analogous group, and crosslinking monomers which have more than one radically polymerizable group.

**10.** The method according to any of claims 8 to 9, wherein the monomers a) are selected from C1 to C8 alkyl acrylates, C1 to C8 alkyl methacrylates, and styrene, the monomers b) are selected from acrylic acid, methacrylic acid, and itaconic acid, and the monomers c) are selected from hydroxyalkyl (meth)acrylates having 1 to 10 carbon atoms in the alkyl group.

**11.** The method according to any of the preceding claims, wherein the adhesive polymer of the laminating adhesive has a glass transition temperature of -20 to +10°C, measured by Differential Scanning Calorimetry according to ASTM D 3418-08 as the midpoint temperature of the second heating curve at a heating rate of 20°C/min.

## Patentansprüche

**1.** Verfahren zum Recycling von Film-zu-Film-Laminaten, wobei die Film-zu-Film-Laminate einen ersten Polymerfilm

und wenigstens einen zweiten Polymer- oder Metallfilm aufweisen, wobei der erste und der zweite Film unter Verwendung eines Laminierklebstoffs aneinander gebunden sind,

wobei das Verfahren Ablösen des ersten von dem zweiten Film durch Behandeln des Film-zu-Film-Laminats mit einer wässrigen Flüssigkeit mit einem pH-Wert von höher als 8 bei einer Temperatur von 40 °C oder mehr umfasst, wobei der erste und der zweite Film durch den Laminierklebstoff so fest aneinander gebunden sind, dass die Abziehfestigkeit, gemessen 24 h nach Laminatherstellung und bei 23 °C und 50 % relativer Feuchtigkeit in einem Winkel von 90° und einer Entfernungsgeschwindigkeit von 100 mm/min, 1 N/15 mm oder mehr beträgt, und

wobei das Haftpolymer des Laminierklebstoffs eine Glasübergangstemperatur von -30 bis +15 °C, gemessen durch Differentialscanning-Kalorimetrie gemäß ASTM D 3418-08 als die Mittelpunkttemperatur der zweiten Heizkurve bei einer Heizrate von 20 °C/min, aufweist, **dadurch gekennzeichnet, dass** die Oberflächenenergie eines Films des Laminierklebstoffs größer als 30 mN/m ist, wenn die Wasserdampfdurchlässigkeitsrate von jedem von dem ersten und dem zweiten Film kleiner als oder gleich 10 $g/m^2$ d ist, und die Oberflächenenergie eines Films des Laminierklebstoffs größer als 19 mN/m ist, wenn die Wasserdampfdurchlässigkeitsrate von wenigstens einem von dem ersten und dem zweiten Film größer als 10 $g/m^2$ d ist, wobei die Wasserdampfdurchlässigkeitsrate für Filme von 25 $\mu$m bei 38 °C und 90 % relativer Feuchtigkeit gemessen wird; und die Oberflächenenergie als freie Oberflächenenergie wie in den Beispielen beschrieben gemessen wird.

2. Verfahren gemäß Anspruch 1, wobei das Material des ersten Films ausgewählt ist aus der Gruppe bestehend aus Polyethylen, orientiertem Polypropylen, nicht gezogenem Polypropylen, Polyamid, Polyethylenterephthalat, Polyacetat, Cellophan; und wobei das Material des zweiten Films ausgewählt ist aus der Gruppe bestehend aus Polyethylen, orientiertem Polypropylen, nicht gezogenem Polypropylen, Polyamid, Polyethylenterephthalat, Polyacetat, Cellophan, metallisierten Filmen und Metallfolien.

3. Verfahren gemäß Anspruch 1 oder 2, wobei der erste Polymerfilm ein Polyolefin ist und der zweite Polymerfilm ausgewählt ist aus Polyolefinen und Polyestern.

4. Verfahren gemäß Anspruch 3, wobei der erste und der zweite Polymerfilm Polypropylen sind oder wobei der erste Polymerfilm Polyethylen ist und der zweite Polymerfilm Polyethylenterephthalat ist.

5. Verfahren gemäß einem der vorstehenden Ansprüche, wobei der Verbundfilm durch Delaminieren des ersten Polymerfilms von dem zweiten Polymerfilm in einem wässrigen Medium mit einem pH-Wert von höher als 8 bei einer Temperatur von gleich oder höher als 50 °C recycelbar ist.

6. Verfahren gemäß einem der vorstehenden Ansprüche, wobei der erste und der zweite Polymerfilm bei einem pH-Wert von 7 oder darunter bei einer Temperatur von 23 °C nicht delaminieren.

7. Verfahren gemäß einem der vorstehenden Ansprüche, wobei der Laminierklebstoff bei einem pH-Wert von 6 bis 8 nicht wasserlöslich ist.

8. Verfahren gemäß einem der vorstehenden Ansprüche, wobei der Laminierklebstoff in der Form einer wässrigen Polymerdispersion aufgebracht wird und die wässrige Polymerdispersion Polymerpartikel in Dispersion in Wasser umfasst, die durch radikalische Emulsionspolymerisation von Monomeren herstellbar sind, umfassend

a) wenigstens 60 Gew.-%, bezogen auf die Gesamtmenge der Monomere, an wenigstens einem Monomer ausgewählt aus der Gruppe bestehend aus C1- bis C20-Alkylacrylaten, C1-bis C20-Alkylmethacrylaten, Vinylestern von Carbonsäuren, die bis zu 20 Kohlenstoffatome umfassen, Vinylaromaten mit bis zu 20 Kohlenstoffatomen, Vinylhalogeniden, Vinylethern von Alkoholen, die 1 bis 10 Kohlenstoffatome umfassen, aliphatischen Kohlenwasserstoffen mit 2 bis 8 Kohlenstoffatomen und einer oder zwei Doppelbindungen, und Gemischen dieser Monomere, und
b) wenigstens 1 Gew.-%, bezogen auf die Gesamtmenge der Monomere, an wenigstens einem Monomer mit wenigstens einer Säuregruppe, und
c) gegebenenfalls umfassend weitere Monomere, die von den Monomeren a) und b) verschieden sind.

9. Verfahren gemäß Anspruch 8, wobei die Polymerpartikel aus Monomeren hergestellt sind, umfassend

a) von 90 bis 98 Gew.-%, bezogen auf die Gesamtmenge der Monomere, an wenigstens einem Monomer

ausgewählt aus der Gruppe bestehend aus C1- bis C20-Alkylacrylaten, C1-bis C20-Alkylmethacrylaten, Vinylestern von Carbonsäuren, die bis zu 20 Kohlenstoffatome umfassen, Vinylaromaten mit bis zu 20 Kohlenstoffatomen, und

b) von 2 bis 10 Gew.-%, bezogen auf die Gesamtmenge der Monomere, an wenigstens einem Monomer mit wenigstens einer Säuregruppe, ausgewählt aus der Gruppe bestehend aus alpha,beta-monoethylenisch ungesättigten C3-C8-Carbonsäuren und C4-C8-Dicarbonsäuren und ihren entsprechenden Anhydriden, und

c) 0 bis 8 Gew.-%, bezogen auf die Gesamtmenge der Monomere, an anderen Monomeren, die von den Monomeren a) und b) verschieden sind und ausgewählt sind aus der Gruppe bestehend aus Acrylamid, Diacetonacrylamid, Methacrylamid, N-Methylolacrylamid, N-Methylolmethacrylamid, Phenyloxyethylglycolmono(meth)acrylat, Monomeren, die Hydroxygruppen umfassen, Monomeren, die Aminogruppen umfassen, Nitrilen von alpha,beta-monoethylenisch ungesättigten C3-C8-Carbonsäuren, bifunktionellen Monomeren, die neben einer ethylenisch ungesättigten Doppelbindung wenigstens eine Glycidylgruppe, Oxazolingruppe, Ureidogruppe oder Ureido-analoge Gruppe aufweisen, und vernetzenden Monomeren, die mehr als eine radikalisch polymerisierbare Gruppe aufweisen.

**10.** Verfahren gemäß einem der Ansprüche 8 bis 9, wobei die Monomere a) ausgewählt sind aus C1- bis C8-Alkylacrylaten, C1- bis C8-Alkylmethacrylaten und Styrol, die Monomere b) ausgewählt sind aus Acrylsäure, Methacrylsäure und Itaconsäure und die Monomere c) ausgewählt sind aus Hydroxyalkyl(meth)acrylaten mit 1 bis 10 Kohlenstoffatomen in der Alkylgruppe.

**11.** Verfahren gemäß einem der vorstehenden Ansprüche, wobei das Haftpolymer des Laminierklebstoffs eine Glasübergangstemperatur von -20 bis +10 °C, gemessen durch Differentialscanning-Kalorimetrie gemäß ASTM D 3418-08 als die Mittelpunkttemperatur der zweiten Heizkurve bei einer Heizrate von 20 °C/min, aufweist.

## Revendications

**1.** Procédé de recyclage de stratifiés film-sur-film, les stratifiés film-sur-film ayant un premier film polymérique et au moins un deuxième film polymérique ou métallique, le premier et le deuxième film étant liés l'un à l'autre en utilisant un adhésif de stratification, le procédé comprenant le détachement du premier film du deuxième film en traitant le stratifié film-sur-film par un liquide aqueux doté d'un pH supérieur à 8 à une température de 40 °C ou plus, le premier et le deuxième film étant liés l'un à l'autre par l'adhésif de stratification de manière tellement ferme que la résistance au pelage, mesurée 24 h après la production du stratifié et à 23 °C et 50 % d'humidité relative à un angle de 90° et une vitesse d'élimination de 100 mm/min, étant de 1 N/15 mm ou plus, et

le polymère adhésif de l'adhésif de stratification ayant une température de transition vitreuse de -30 à +15°C mesurée par calorimétrie différentielle à balayage selon la norme ASTM D 3418-08 comme la température de point milieu de la deuxième courbe de chauffage à une vitesse de chauffage de 20 °C/min,

**caractérisé en ce que** l'énergie de surface d'un film de l'adhésif de stratification est supérieure à 30 mN/m si le taux de transmission de vapeur d'eau de chacun parmi le premier et le deuxième film est inférieur ou égal à 10 g/$m^2$ d, et l'énergie de surface d'un film de l'adhésif de stratification étant supérieure à 19 mN/m si le taux de transmission de vapeur d'eau d'au moins l'un parmi le premier et le deuxième film est supérieur à 10 g/$m^2$ d, le taux de transmission de vapeur d'eau étant mesuré pour des films de 25 μm à 38 °C et 90 % d'humidité relative ; et l'énergie de surface étant mesurée comme une énergie de surface libre comme décrite dans les exemples.

**2.** Procédé selon la revendication 1, le matériau du premier film étant choisi dans le groupe constitué par un polyéthylène, un polypropylène orienté, un polypropylène non étiré, un polyamide, un poly(téréphtalate d'éthylène), un polyacétate, un cellophane ; et le matériau du deuxième film étant choisi dans le groupe constitué par un polyéthylène, un polypropylène orienté, un polypropylène non étiré, un polyamide, un poly(téréphtalate d'éthylène), un polyacétate, un cellophane, des films métallisés et des feuilles métallisées.

**3.** Procédé selon la revendication 1 ou 2, le premier film polymérique étant une polyoléfine et le deuxième film polymérique étant choisi parmi des polyoléfines et des polyesters.

**4.** Procédé selon la revendication 3, le premier et le deuxième film polymériques étant un polypropylène ou le premier film polymérique étant un polyéthylène et le deuxième film polymérique étant un poly(téréphtalate d'éthylène) .

5. Procédé selon l'une quelconque des revendications précédentes, le film composite étant recyclable par délamination du premier film polymérique du deuxième film polymérique dans un milieu aqueux à un pH supérieur à 8 à une température égale ou supérieure à 50 °C.

6. Procédé selon l'une quelconque des revendications précédentes, le premier et le deuxième film polymériques ne délaminant pas à pH 7 ou moins à une température de 23 °C.

7. Procédé selon l'une quelconque des revendications précédentes, l'adhésif de stratification n'étant pas soluble dans l'eau à un pH de 6 à 8.

8. Procédé selon l'une quelconque des revendications précédentes, l'adhésif de stratification étant appliqué sous la forme d'une dispersion aqueuse de polymère, et la dispersion aqueuse de polymère comprenant des particules de polymère en dispersion dans l'eau qui peuvent être préparées par polymérisation en émulsion radicalaire de monomères comprenant

a) au moins 60 % en poids, sur la base de la quantité totale de monomères, d'au moins un monomère choisi dans le groupe constitué par des acrylates d'alkyle en C1 à C20, des méthacrylates d'alkyle en C1 à C20, des esters de vinyle d'acides carboxyliques comprenant jusqu'à 20 atomes de carbone, des composés vinylaromatiques ayant jusqu'à 20 atomes de carbone, des halogénures de vinyle, des éthers de vinyle d'alcools comprenant 1 à 10 atomes de carbone, des hydrocarbures aliphatiques ayant 2 à 8 atomes de carbone et une ou deux doubles liaisons, et des mélanges de ces monomères, et
b) au moins 1 % en poids, sur la base de la quantité totale de monomères, d'au moins un monomère ayant au moins un groupe de type acide, et
c) éventuellement comprenant des monomères supplémentaires, différents des monomères a) et b).

9. Procédé selon la revendication 8, les particules de polymère étant produites à partir de monomères comprenant

a) de 90 à 98 % en poids sur la base de la quantité totale de monomères, d'au moins un monomère choisi dans le groupe constitué par des acrylates d'alkyle en C1 à C20, des méthacrylates d'alkyle en C1 à C20, des esters de vinyle d'acides carboxyliques comprenant jusqu'à 20 atomes de carbone, des composés vinylaromatiques ayant jusqu'à 20 atomes de carbone, et
b) de 2 à 10 % en poids, sur la base de la quantité totale de monomères, d'au moins un monomère ayant au moins un groupe de type acide choisi dans le groupe constitué par des acides carboxyliques en C3-C8 et acides dicarboxyliques en C4-C8 alpha,bêta-monoéthyléniquement insaturés et leurs anhydrides respectifs, et
c) 0 à 8 % en poids, sur la base de la quantité totale de monomères, d'autres monomères, différents des monomères a) et b) choisis dans le groupe constitué par l'acrylamide, le diacétone acrylamide, le méthacrylamide, le N-méthylolacrylamide, le N-méthylolméthacrylamide, un mono(méth)acrylate de phénýloxyéthylglycol, des monomères comprenant des groupes hydroxyle, des monomères comprenant des groupes amino, des nitriles d'acides carboxyliques en C3-C8 alpha,bêta-monoéthyléniquement insaturés, des monomères bifonctionnels qui aussi bien qu'une double liaison éthyléniquement insaturée possèdent au moins un groupe glycidyle, un groupe oxazoline, un groupe uréido ou un groupe analogue d'uréido, et des monomères de réticulation qui possèdent plus d'un groupe polymérisable de manière radicalaire.

10. Procédé selon l'une quelconque des revendications 8 à 9, les monomères a) étant choisis parmi des acrylates d'alkyle en C1 à C8, des méthacrylates d'alkyle en C1 à C8, et le styrène, les monomères b) étant choisis parmi l'acide acrylique, l'acide méthacrylique et l'acide itaconique, et les monomères c) étant choisis parmi des (méth)acrylates d'hydroxyalkyle ayant 1 à 10 atomes de carbone dans le groupe alkyle.

11. Procédé selon l'une quelconque des revendications précédentes, le polymère adhésif de l'adhésif de stratification ayant une température de transition vitreuse de -20 à +10 °C mesurée par calorimétrie différentielle à balayage selon la norme ASTM D 3418-08 comme la température de point milieu de la deuxième courbe de chauffage à une vitesse de chauffage de 20 °C/min.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017070370 A1
- EP 0644229 A1
- WO 2011009800 A


### Non-patent literature cited in the description


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. 5, 169
- **J. BRANDRUP ; E.H. IMMERGUT.** Polymer Handbook. J. Wiley, 1966
- **J. BRANDRUP, E.H. IMMERGUT.** Polymer Handbook. J. Wiley, 1975
- **J. BRANDRUP, E.H. IMMERGUT.** Polymer Handbook. J. Wiley, 1989
- Methoden der organischen Chemie. **HOUBEN-WEYL.** Makromolekulare Stoffe. Georg-Thieme-Verlag, 1961, vol. XIV/1, 411-420
- **R. COLES ; D. MCDOWELL ; M.J. KIRWAN.** Food Packaging Technology. Blackwell, 2003, 223
- **JORDA-VILAPLANA et al.** *J. Appl. Polym. Sci.,* 2015, vol. 132, 42391, https://doi.org/10.1002/app.42391
- **OWENS et al.** *J. Appl. Polym. Sci.,* 1969, vol. 13, 1741